# EUROPÄISCHE PATENTANMELDUNG

(11) **EP 1 005 235 A2**
(43) Veröffentlichungstag der Anmeldung: **31.05.2000**
(21) Anmeldenummer: 99122389.2
(22) Anmeldetag: 10.11.1999
(51) Int. Cl.: H04Q 1/14, H01R 13/00

(54) **Vorrichtung zum Befestigen moduler Mehrfach-Anchlussleisten an parallelen Trägerelementen eines Verteilergestells einer Telefonzentrale o. dgl.**

(30) Priorität: 25.11.1998 CH 234698
(71) Anmelder: Reichle & De-Massari AG, 8620 Wetzikon (CH)
(72) Erfinder: Reichle, Hans, 8620 Wetzikon (CH)
(74) Vertreter: Petschner, Goetz

(57) **Zusammenfassung**

Die Vorrichtung zum Befestigen moduler Mehrfach-Anschlussleisten (1) an parallele Trägerelemente (2) eines Verteilergestells einer Telefonzentrale o. dgl. besteht aus einem wenigstens teilweise federelastischen, elektrisch leitfähigen Band-Material vorgegebener Länge, an dessen einem Ende ein, zum Zusammenwirken mit einem Trägerelement (2) bestimmter Klemm- oder Klinken- oder Schnappverschlussteil (11) angeformt ist und dessen anderes Ende einen zum Zusammenwirken mit seitlichen Klinkenmitteln (3) einer Mehrfach-Anschlussleiste (1) sowie mit deren Erdungsanschlüssen (4) bestimmten Klemmsteg (12) bildet.

Ein solcher Befestigungs- und Erdungs-Adapter gestattet eine leichte Anordnung unter gleichzeitiger Erdung von Mehrfach-Anschlussleisten am Trägerelement eines Verteilergestells, indem solche Adapter in der Regel seitlich auf die Anschlussleiste und dann auf die betreffenden Trägerelemente aufgedrückt werden.

## Beschreibung

Die vorliegende Erfindung betrifft eine Vorrichtung zum Befestigen moduler Mehrfach-Anschlussleisten an parallelen Trägerelementen eines Verteilergestells einer Telefonzentrale o. dgl.

Durch die DE 37 28 368 oder die CH 676 306 oder die EP 0 658 059 u.a. sind Gestellsysteme für Telefonanlagen u. dgl. bekannt geworden, welche parallele flächige oder runde, in der Regel vertikal mit modularem Abstand angeordnete Trägerelemente umfassen, die der Montage einer Mehrzahl von Mehrfach-Anschlussleisten dicht über- oder nebeneinander dienen.

Die genannten Mehrfach-Anschlussleisten für betreffende Ortsanschlussliniennetze resp. Telefonzentralen resp. Verteilersysteme dienen in der heutigen Technik der in der Regel lötfreien Schneid-Klemm-Andrahtung der elektrisch isolierten Adern der Amtsleitungen (ankommende Leitungen) und der Teilnehmerleitungen (abgehende Leitungen), wobei das freie Rangieren der Adern der Teilnehmerleitungen sowie das schnelle Aufschalten der Adern der Amts- und Teilnehmerleitungen im Vordergrund rationeller Lösungen stehen. Ensprechend sind an diesen aus Kunststoff bestehenden Mehrfach-Anschlussleisten, im modularen Abstand der Trägerelemente, Klinken- oder Schnappverschlussmittel angeformt, um die Mehrfach-Anschlussleisten werkzeugfrei und lösbar an den Trägerelementen anbringen zu können.

Nachteilig ist hierbei, dass die angeformten Klinken- oder Schnappverschlussmittel an den Kunststoff-Anschlussleisten einer relativ starken Materialermüdung unterliegen und so an Haltekraft an den Trägerelementen verlieren, was Lageänderungen zur Folge haben kann.

Nachteilig ist ferner, dass für das Verbinden allfälliger Kabel-Abschirmungen und/oder Überspannungsschutz-Kassetten u.a. mit der Masse des metallischen Verteilergestells (Erdung) zusätzliche Massnahmen konstruktiver Art getroffen werden müssen, was den heutigen Anforderungen an rationeller Herstellung sowie einfacher und sicherer Handhabung in keiner Form genügt.

Entsprechend ist hier Aufgabestellung die Schaffung einer Vorrichtung zum Befestigen moduler Mehrfach-Anschlussleisten an parallelen Trägerelementen eines Verteilergestells einer Telefonzentrale o. dgl., weiche neben der Funktion einer dauerhaft ortsfesten Adaption resp. Anbringung gleichzeitig eine Masse-Verbindung zwischen Verteilergestell und Anschlussleisten herstellt.

Dies wird erfindungsgemäss zunächst dadurch erreicht, dass die Vorrichtung zum Befestigen einer Mehrfach-Anschlussleiste an parallelen Trägerelementen aus einem wenigstens teilweise federelastischen, elektrisch leitfähigen Band-Material vorgegebener Länge besteht, an dessen einem Ende ein, zum Zusammenwirken mit einem Trägerelement bestimmter Klemm- oder Klinken- oder Schnappverschlussteil angeformt ist und dessen anderes Ende einen zum Zusammenwirken mit seitlichen Klinkenmitteln einer Mehrfach-Anschlussleiste sowie mit deren Erdungsanschlüssen bestimmten Klemmsteg bildet.

Ein solcher Befestigungs- und Erdungs-Adapter gestattet somit eine leichte Anordnung unter gleichzeitiger Erdung von Mehrfach-Anschlussleisten am Trägerelement eines Verteilergestells, indem solche Adapter in der Regel seitlich auf die Anschlussleiste und dann auf die betreffenden Trägerelemente aufgedrückt werden und vice versa, wobei die Verwendung eines federelastischen Materials, wie beispielsweise Federstahl, zudem eine immer gleichbleibende Klemmkraft und so eine verrutschfreie Adaption gewährleistet.

Hierbei kann für eine modulare Anpassung der Befestigung der Anschlussleisten an die parallelen Trägerelemente zwischen dem Klemm- oder Klinken- oder Schnappverschlussteil und dem Klemmsteg der Vorrichtung eine entsprechende Abkröpfung (13, 13') vorgesehen sein, was gestattet, beispielsweise 10DA- und 8DA-Anschlussleisten am selben Verteilergestell anzubringen, was zu erheblichen Kosteneinsparungen führt und grössere Flexibilität in der Anwendung erlaubt.

Darüber hinaus gestattet die Elastizität des Adapters einen hohen Toleranzausgleich am Verteilergestell.

Ferner bestehen bevorzugte Ausführungsformen des Erfindungsgegenstandes darin, dass der Klemm- oder Klinken- oder Schnappverschlussteil für die lösbare und werkzeugfreie Anbringung an einem flächigen Trägerelement als Klammer ausgebildet ist oder, dass der Klemm- oder Klinken- oder Schnappverschlussteil für die lösbare und werkzeugfreie Anbringung an einem runden Trägerelement als eine das Rundprofil teilweise umgreifende Schnappklammer ausgebildet ist.

Beispielsweise Ausführungsformen des Erfindungsgegenstandes sind nachfolgend anhand der Zeichnung näher erläutert. Es zeigen:
- Fig. 1: in schaubildartiger Darstellung eine auf einen Montagekanal mittels erfindungsgemässen Adaptern aufgebrachte Anschlussleiste mit Erdungsanschluss und Überspannungsschutz-Kassette;
und
- Fig. 2: in schaubildartiger Darstellung den erfindungsgemässen Adapter im Zusammenwirken mit einem runden Trägerelement eines Verteilergestelles.

Die erfindungsgemässe Vorrichtung dient der Befestigen moduler Mehrfach-Anschlussleisten 1 an parallelen Trägerelementen 2 eines Verteilergestells einer Telefonzentrale o. dgl.

Verteilergestelle der hier infrage stehenden Art umfassen in der Regel flächige oder runde, modul-beabstandete parallele, vertikale Trägerelemente, an welchen sogenannte Mehrfach-Anschlussleisten mit Überspannungsschutz-Kassette 5 und Erdungs-Anschlussmitteln 4 klemmend angebracht werden können.

Solche Verteilergestelle sowie solche Mehrfach-Anschlussleisten sind mehrfach bekannt, sodass hier auf eine weitergehende Erläuterung verzichtet werden kann.

Das hier vorliegende Problem hingegen befasst sich mit der Möglichkeit der Befestigung solcher bekannten Anschlussleisten an den bekannten Verteilergestellen ohne zusätzliche Massnahmen einer Masse-Verbindung zwischen Verteilergestell und Anschlussleisten.

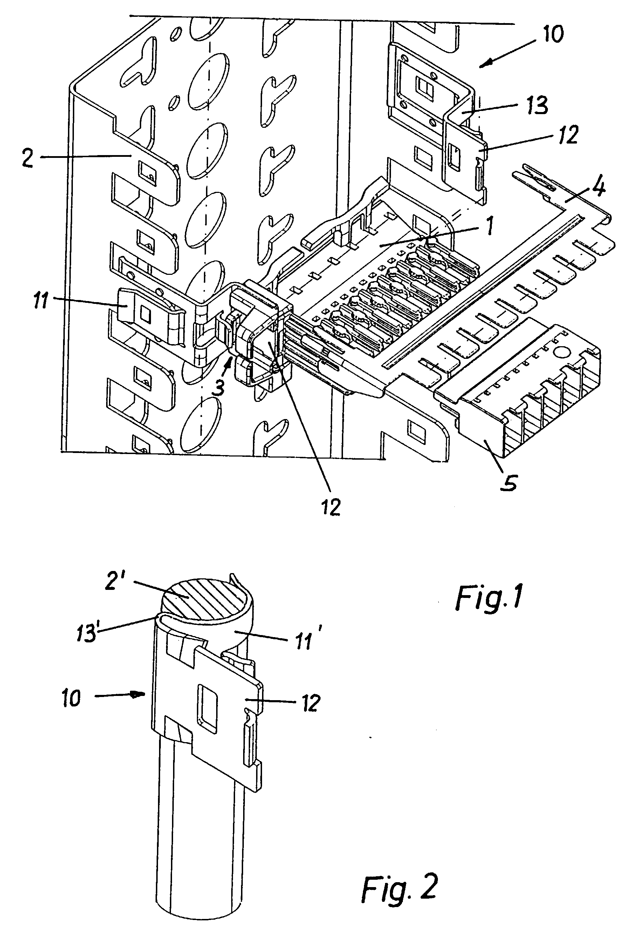

Hierfür besteht die Vorrichtung 10 zunächst gemäss den Fig. 1 und 2 aus einem wenigstens teilweise federelastischen, elektrisch leitfähigen Band-Material vorgegebener Länge, an dessen einem Ende ein, zum Zusammenwirken mit einem Trägerelement 2 bestimmter Klemm- oder Klinken- oder Schnappverschlussteil 11,11' angeformt ist und dessen anderes Ende einen zum Zusammenwirken mit seitlichen Klinkenmitteln 3 einer Mehrfach-Anschlussleiste 1 sowie mit deren Erdungsanschlüssen 4 bestimmten Klemmsteg 12 bildet. Das Material für solche Adapter kann beispielsweise Federstahl sein. Die Elastizität eines solchen Adapters gestattet zudem einen hohen Toleranzausgleich am Verteilergestell.

Für eine modulare Anpassung der Befestigung der Anschlussleisten 1 an die parallelen Trägerelemente 2 des Verteilergestells ist zwischen dem Klemm- oder Klinken- oder Schnappverschlussteil 11,11' und dem Klemmsteg 12 des Adapters 10 eine entsprechende Abkröpfung 13 (Fig 1) resp. 13' (Fig.2) vorgesehen.

Die entsprechende Ausgestaltung einer solchen Abkröpfung erlaubt, beispielsweise 10DA- und 8DA-Anschlussleisten am selben Verteilergestell anzubringen.

Gemäss Fig. 1 ist der Klemm- oder Klinken- oder Schnappverschlussteil 11 für die lösbare und werkzeugfreie Anbringung an einem flächigen Trägerelement 2 als Klammer ausgebildet.

Bei einer anderen Ausführungsform gemäss Fig. 2 ist der Klemm- oder Klinken- oder Schnappverschlussteil für die lösbare und werkzeugfreie Anbringung an einem runden Trägerelement 2' als eine das Rundprofil teilweise umgreifende Schnappklammer 11' ausgebildet.

Es wird Schutz beansprucht wie folgt:

## Patentansprüche

1. Vorrichtung zum Befestigen moduler Mehrfach-Anschlussleisten (1) an parallelen Trägerelementen (2) eines Verteilergestells einer Telefonzentrale o. dgl.,
dadurch gekennzeichnet,
dass die Vorrichtung (10) aus einem wenigstens teilweise federelastischen, elektrisch leitfähigen Band-Material vorgegebener Länge besteht, an dessen einem Ende ein, zum Zusammenwirken mit einem Trägerelement (2, 2') bestimmter Klemm- oder Klinken- oder Schnappverschlussteil (11, 11') angeformt ist und dessen anderes Ende einen zum Zusammenwirken mit seitlichen Klinkenmitteln (3) einer Mehrfach-Anschlussleiste (1) sowie mit deren Erdungsanschlüssen (4) bestimmten Klemmsteg (12) bildet.

2. Vorrichtung zum Befestigen moduler Mehrfach-Anschlussleisten an parallelen Trägerelementen nach Anspruch 1,
dadurch gekennzeichnet, dass zwischen dem Klemm- oder Klinken- oder Schnappverschlussteil (11, 11') und dem Klemmsteg (12) der Vorrichtung (10) zur modularen Anpassung der Befestigung der Anschlussleiste eine entsprechende Abkröpfung (13, 13') vorgesehen ist.

3. Vorrichtung zum Befestigen moduler Mehrfach-Anschlussleisten an parallelen Trägerelementen nach den Ansprüchen 1 und 2,
dadurch gekennzeichnet,
dass der Klemm- oder Klinken- oder Schnappverschlussteil (11) für die lösbare und werkzeugfreie Anbringung an einem flächigen Trägerelement (2) als Klammer ausgebildet ist (Fig. 1).

4. Vorrichtung zum Befestigen moduler Mehrfach-Anschlussleisten an parallelen Trägerelementen nach den Ansprüchen 1 und 2,
dadurch gekennzeichnet,
dass der Klemm- oder Klinken- oder Schnappverschlussteil (11') für die lösbare und werkzeugfreie Anbringung an einem runden Trägerelement (2') als eine das Rundprofil teilweise umgreifende Schnappklammer (11') ausgebildet ist (Fig. 2).
